# EUROPEAN PATENT SPECIFICATION

(11) **EP 0 344 749 B1**
(45) Date of publication and mention of the grant of the patent: **01.02.1995**
(21) Application number: 89109847.7
(22) Date of filing: 31.05.1989
(51) Int. Cl.: B04C 3/00, B04C 3/06

(54) **Vortex tube separating device**
Wirbelrohr-Abscheider
Séparateur à tube vortex

(30) Priority: 02.06.1988 ZA 883923
(43) Date of publication of application: 06.12.1989
(73) Proprietor: CYCLOFIL (PROPRIETARY) LIMITED, Pretoria Transvaal Province (ZA)
(72) Inventor: Prinsloo, Willem Johannes Christian, Pretoria Transvaal Province (ZA); de Villiers, Pierre, Hartbeespoort Transvaal Province (ZA); van Dijken, Marten Cornelis, Pretoria Transvaal Province (ZA)
(74) Representative: Cohausz & Florack Patentanwälte

(56) References cited:
- FR-A- 1 571 650
- FR-A- 2 142 568
- GB-A- 1 465 833
- GB-A- 2 064 359
- US-A- 1 735 298
- US-A- 3 915 679

## Description

THIS INVENTION relates to a separating device suitable for use in treating a particle containing gas flow stream to separate particles from the gas or to clean the gas of particles.

FR 1 571 650 discloses an air cleaner especially for use in an array of air cleaners and having a round tubular body of smaller than 25 mm inside diameter, a deflector having helical vanes to create a vortex in an incoming air flow stream, a central outlet passage for clean air and an annular outlet for contaminated air. The disclosure concentrates on quantitative aspects and, for a number of quantities or ratios of quantities, stipulates narrow ranges and precise limits to the ranges. It thus purports to be very accurate.

Optionally, the outer tube may flare, either along its whole length, or along a portion of its length downstream of the deflector. The cone angle is absolutely limited to less than 10°, preferably less than 3°. The disclosure motivates the strict limitation.

For convenience, to denote direction, the terms "upstream" and "downstream" will be used in this specification. These terms should be interpreted in relation to the normal direction of flow through the device in use.

In accordance with the invention, there is provided a method of cleaning a particle containing gas flow stream from particles in a gas cleaning device, or recovering particles from a particle containing gas flow stream in a particle recovering device, of the kind comprising
an outer round tube having an inlet at one end which will be an upstream end in use, and an opposed end which will be a downstream end in use;
an axially arranged vortex or rotating flow generator in a vortex generation region in the tube downstream of the inlet;
a separation region downstream of the vortex generating region;
a peripheral outlet region toward the periphery of the tube downstream of the separation region;
a central outlet region toward the centre of the tube downstream of the separation region;
an inner round extraction tube, arranged concentrically within the outer round tube to separate the peripheral and central outlet regions, having an inlet at an upstream end thereof which is at a predetermined axial position corresponding to the end of the separation region, and an outlet means for the central outlet region at a downstream end thereof, said upstream end of the inner round extraction tube cooperating with the outer round tube to define an annular inlet of the peripheral outlet region;
outlet means for the peripheral outlet region toward a downstream end thereof;
locating means locating the inner round extraction tube toward the downstream end thereof to the outer round tube such that the inner round extraction tube extends cantilever fashion in an upstream direction from the locating means and such that the inlet of the peripheral outlet region is circumferentially continuous and without circumferentially interrupted structure,
the method including
introducing the particle containing gas flow stream axially into the outer round tube via its inlet;
inducing rotating flow in said particle containing gas flow stream by guiding it through the vortex generator;
allowing the particles to concentrate toward the outer periphery of the flow stream on account of the rotating flow;
guiding a particle enriched portion of the flow stream, toward the outer periphery of the tube, into the peripheral outlet region;
guiding a particle depleted portion of the flow stream, toward the centre of the tube, into the central outlet region,
wherein the outer round tube has a continuously divergent portion having an included angle or cone angle of between 15° and 60° and extending from the inlet downstream through a predetermined axial distance which is at least equal to the cumulative length of the vortex generating region and the separation region; and wherein the flow is allowed to diverge at an angle of between 15° and 60° along said continuously divergent portion of the outer round tube.

In a preferred embodiment said included angle or cone angle of the continuously divergent portion of the outer round tube may be about 30°. Thus, in a preferred method the flow may be allowed to diverge at an angle of about 30° along said continuously divergent portion of the outer round tube. Said flow may be allowed to diverge over an axial length between 1 time and 3 times the nominal diameter of the outer tube at its inlet to a flow area which is larger than the flow area of the inlet of the round tube by between 30% and 800%.

The invention extends to a vortex tube gas cleaning device or vortex tube particle recovery device suitable for use in treating a particle containing gas flow stream to clean the gas of particles or to recover particles from the gas, the device comprising
an outer round tube having an inlet at one end which will be an upstream end in use, and an opposed end which will be a downstream end in use;
an axially arranged vortex or rotating flow generator in a vortex generation region in the tube downstream of the inlet;
a separation region downstream of the vortex generating region;
a peripheral outlet region toward the periphery of the tube downstream of the separation region;
a central outlet region toward the centre of the tube downstream of the separation region;
an inner round extraction tube, arranged concentrically within the outer round tube to separate the peripheral and central outlet regions, having an inlet at an upstream end thereof which is at a predetermined axial position corresponding to the end of the separation region, and an outlet means for the central outlet region at a downstream end thereof, said upstream end of the inner round extraction tube cooperating with the outer round tube to define an annular inlet of the peripheral outlet region;
outlet means for the peripheral outlet region toward a downstream end thereof;
locating means locating the inner round extraction tube toward the downstream end thereof to the outer round tube such that the inner round extraction tube extends cantilever fashion in an upstream direction from the locating means and such that the inlet of the peripheral outlet region is circumferentially continuous and without circumferentially interrupted structure,
wherein the outer round tube has a continuously divergent portion having an included angle or cone angle of between 15° and 60° extending from the inlet downstream through a predetermined axial distance which is at least equal to the cumulative length of the vortex generating region and the separation region.

Said included angle or cone angle of the continuously divergent portion of the outer round tube may be about 30°.

The length of the divergent portion may be between 1 time and 3 times the nominal diameter of the outer tube at its inlet and the flow area at the downstream end of the separation region may be between 30% and 800% larger than at the inlet of the outer tube.

The periphery of the vortex generator may be correspondingly divergent.

The invention is now described by way of example with reference to the accompanying diagrammatic drawings. In the drawings
Figure 1 shows, by way of explanation only, in axial section, one embodiment of a gas cleaning device of the general kind to which this invention relates but which is not an embodiment of the invention; and
Figure 2 shows, in axial section, a gas cleaning device in accordance with this invention.

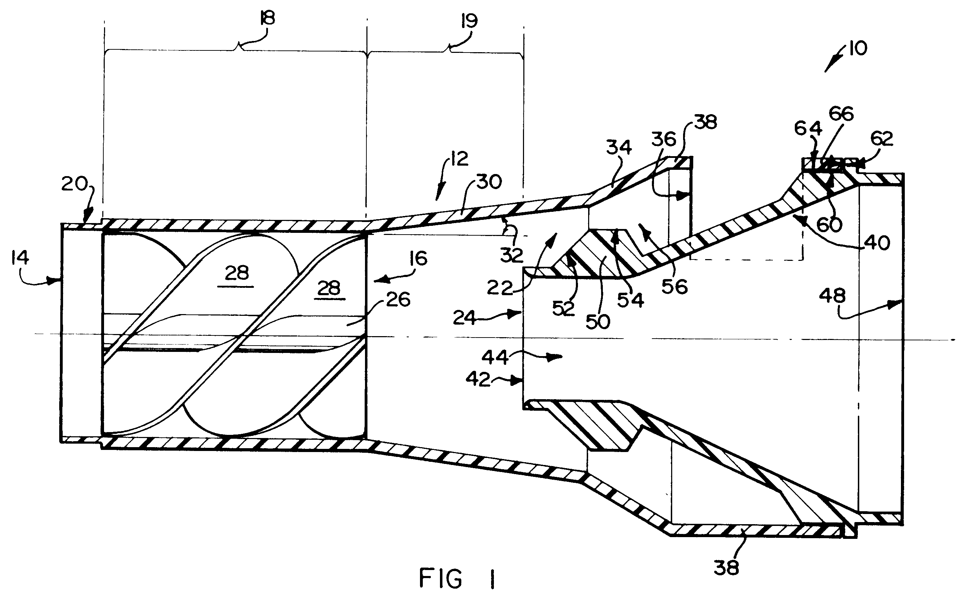

With reference to Figure 1 of the drawings, an embodiment of a vortex tube gas cleaning device of the general kind to which this invention relates, and which is illustrated and described by way of explanation only, is generally indicated by reference numeral 10. The device 10 is generally of symmetrical round shape and is assembled of different components of moulded synthetic plastics material. In other embodiments, the devices may be of other materials, such as of abrasion-resistant metal, e.g. steel; corrosion-resistent or non-corrosive metal, e.g. steel; or the like.

The device 10 comprises an outer round tube generally indicated at 12, a vortex generator 16 fitting snugly within the tube 12 toward one end and an inner extraction tube 40 in the form of an inner round tube fitted co-axially within the outer tube 12 toward the opposed end thereof. The end having the vortex generator will in use be the upstream end, and the opposed end will be the downstream end.

At said upstream end, the tube 12 has an inlet 14. From the inlet 14, the tube 12 extends parallel for a portion of its length to define a vortex generating region 18 within which the vortex generator 16 is located. At its upstream end, the tube 12 has a mounting formation in the form of a recess 20.

The vortex generator 16 has a central core or chine 26 and a pair of helical blades 28 arranged around the core 26, auger fashion. Each blade curves through an angle of 180°. At their peripheries, each blade is at an angle of 57° with the axis.

Downstream of the vortex generating region 18, the wall of the tube 12 diverges as indicated at 30 for a predetermined distance. The included angle of divergence is equal to twice the angle 32 between the diverging wall and the axis of the device 10. The angle 32 is 5° and the included angle is thus 10°.

Downstream of the divergent portion 30, the tube diverges more sharply to form a diffuser wall, which will be described in more detail hereinafter, generally indicated by reference numeral 34.

Downstream of the diffuser wall 34, the tube 12 is parallel as indicated at 38. A single outlet port 36 which extends around a portion of the circumference through an angle of about 120°, is provided in the tube 12 in the parallel portion 38.

The extraction tube 40 has at an upstream end an inlet identified by its leading edge 42 and which leads into a central passage 44 which blends into a diffuser and extends to an outlet 48 of the extraction tube 40.

The leading edge 42 is at a predetermined axial position of the device 10. A separation region 19 is formed between the downstream end of the vortex generator and the leading edge 42. It is to be appreciated that the separation region 19 is divergent as described above.

Downstream of the separation region 19, an outer peripheral or scavenge region 22 is formed annularly between the inner extraction tube 40 and the outer tube 12; and a central or main outlet region 24 is formed bounded by the inner extraction tube 40. Both the scavenge region 22 and the main outlet region 24 are downstream of the separation region 19.

An annular inlet to the scavenge region 22 is formed around the leading edge 42. Closely spaced downstream of said inlet, a ring 50 which is integral with the inner extraction tube 40 projects into the scavenge region 22. The ring 50 forms an oblique leading wall 52 which, in use, contracts the flow in the scavenge region toward an annular orifice 54 defined annularly outside the crown of the ring 50.

The diverging wall portion 34 acts like a diffuser in respect of flow downstream of the annular orifice 54.

Toward its downstream end, the inner extraction tube 40 forms a spigot portion 60, which may be slightly taper if desired. The spigot 60 terminates in an outwardly extending flange having a shoulder 62. The spigot 60 fits snugly within the end portion 64 of the tube 12 and the end 66 of the tube 12 checks the shoulder 62. Thus, the inner extraction tube 40 is concentrically and axially located relative to the outer tube 12. The inner extraction tube 40 extends cantilever fashion in an upstream direction to render the scavenge region 22 unrestricted. Thus the flow passage through the scavenge region 22 including the annular orifice 54 is continuous.

In use, a particle containing gas flow stream is introduced into the tube 12 via the inlet 14. Rotating flow is induced in the flow stream by the vortex generator 16 while the flow stream moves through the vortex generating region 18. When the rotating flow stream enters the separation region 19, it diffuses outwardly as allowed by the divergence 32.

The rotating nature of the flow stream causes centrifugal forces to act on the particles, which are heavier than the gas in the flow stream, and to induce the particles to migrate outwardly and concentrate toward the outer periphery of the flow stream. The divergence 32 allows the particles to move radially further outwardly than what would have been possible in a parallel separation region. The divergence 32 has a secondary, diffuser effect of decelerating the flow thus gaining static pressure in the flow stream at the expense of kinetic or dynamic pressure. The decelerated flow also ameliorates wear on the tube 12 which is of importance especially in the case of abrasive particles.

Generally, the particles are concentrated or enriched in the peripheral portion of the flow stream and the central portion of the flow stream is depleted of particles.

As the particle enriched peripheral portion of the flow stream flows into the scavenge region 22, it is first accelerated as it is contracted along the oblique wall 52 into the orifice 54, and is thereafter decelerated along the diffuser wall 34. The particle enriched portion of the flow stream moves into a plenum 56 from where it exits via the outlet port 36.

The particle depleted portion of the flow stream enters the central or main outlet region via the leading edge 42, is diffused in the diffuser and exits via the outlet 48.

It is to be appreciated that the mass or volume flow ratio of the particle depleted flow stream to the particle enriched flow stream, which is referred to as the "cut" is controlled by controlling the pressure ratios between the inlet pressure at the inlet 14 and the pressure downstream of the outlet port 36 on the one hand, and between the inlet 14 and downstream of the outlet 48 on the other hand.

It is to be appreciated that the effect of the divergence 32 in the separation region 19 described above enhances concentration of the particles in the scavenge region 22.

In the diffuser region 34, static pressure is gained at the expense of dynamic or kinetic pressure, similarly to the secondary effect in the separation region 19. Such gaining of static pressure at the expense of kinetic or dynamic pressure reduces the pressure drop between the inlet 14 and the plenum 56 and thus increases the efficiency of the device 10 from an energy consumption point of view.

Similarly, the diffuser in the central passage 44 gains static pressure at the expense of kinetic or dynamic pressure which reduces the pressure drop between the inlet 14 and the exit 48 and increases the efficiency of the device 10 from an energy consumption point of view.

In a test sample of the general configuration of Figure 1, having an included angle of divergence of 9°, an outer tube inner diameter of 18 mm, a total length of 60 mm, a vortex generating region length of 20 mm, a vortex angle of 180° and a central orifice inner diameter of 10 mm, and operating at a total pressure drop of 4 inch standard water gauge (about 1 kPa) and an air mass flow of 4,6 gram per second, a total mass efficiency of dust removal of about 97% was obtained for AC coarse dust and operating at a 100% cut, i.e. no scavenge flow.

For the same sample, and operating at 90% cut, the total pressure drop was 4 inch standard water gauge (about 1 kPa), the air mass flow was 4,6 gram per second in the main flow stream, and the separation efficiency was more than 98%.

Both tests were done with AC coarse dust.

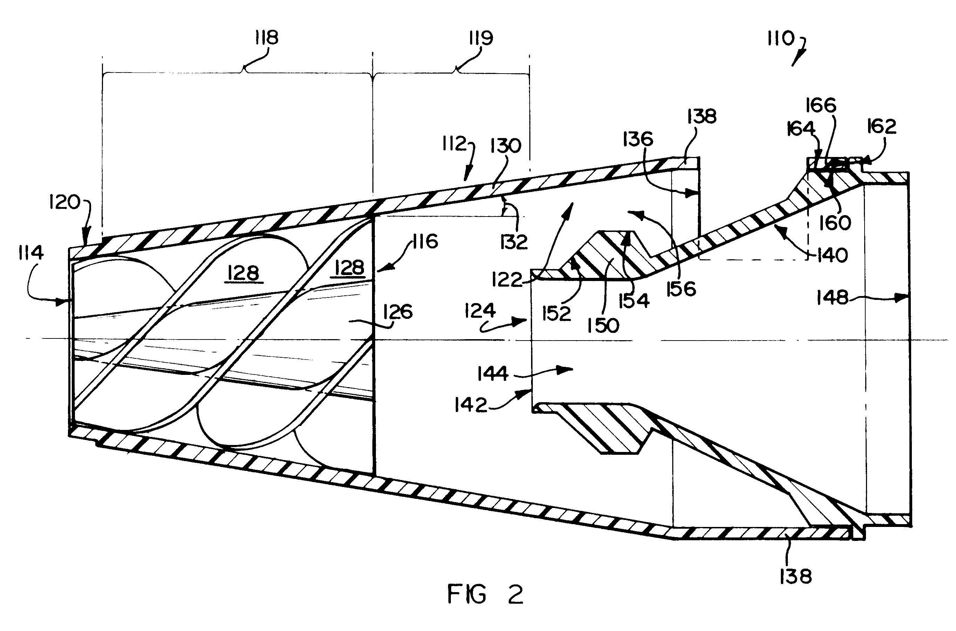

With reference to Figure 2, an embodiment of a vortex tube gas cleaning device in accordance with this invention is generally indicated by reference numeral 110. It is generally similar to the device 10 of Figure 1 and is not again fully described. Important differences between the devices are highlighted below. Like reference numbers refer to like parts.

The device 110 differs from the device 10 in one very important respect. The outer round tube 112 diverges from its inlet 114 to a position intermediate the annular orifice 154 and the outlet port 136. The included angle of divergence, in this embodiment, is constant and is about 30°. The outer periphery of the vortex generator 116 diverges correspondingly.

The core or chine 126 of the vortex generator 116 also diverges, generally at about the same angle as that of the outer tube 112.

In a test sample of the general configuration of Figure 2, having an included angle of divergence of 14°, an outer tube inner diameter of 18 mm, a total length of 60 mm, a vortex generating region length of 20 mm, a vortex angle of 180°, a total length of divergence of 40 mm, and a central orifice inner diameter of 12.5 mm i.e. 56% larger flow area than 10 mm diameter, and operating at a total pressure drop of 3,4 inch standard water gauge (about 0,85 kPa) and an air mass flow of 5 gram per second, a total mass efficiency of dust removal of about 97% was obtained for AC coarse dust and operating at a 100% cut, i.e. no scavenge flow.

For the same sample, and operating at 90% cut, the total pressure drop was 3,4 inch standard water gauge (about 0,85 kPa), the air mass flow was 4,7 gram per second in the main flow stream, and the separation efficiency was more than 98%.

Both tests were done with AC coarse dust.

In another test sample of the general configuration of Figure 2, having an inlet diameter of 50 mm, an included angle of divergence of 30°, a total length of 160 mm, and a central orifice inner diameter of 40 mm, and operating at a total pressure drop of 2,8 inch standard water gauge (about 0,7 kPa) and an air mass flow of 30 gram per second, a total mass efficiency of dust removal of about 91% was obtained for AC coarse dust and operating at a 100% cut, i.e. no scavenge flow.

For the same sample, and operating at 100% cut, and with Alumina of median particle size of 86 micro metre, the total pressure drop was 2,8 inch standard water gauge (about 0,7 kPa), the air mass flow was 30 gram per second in the main flow stream, and the separation efficiency was 99,7%.

The Inventors have made inventive contributions to a number of aspects of separating devices of the kind to which this invention relates. The instant invention emphasises one such aspect namely divergent flow. It is to be appreciated that the feature of the current invention, together with features emphasized in co-pending applications by the same inventors, give rise to a number of advantages. Herebelow, those advantages to which the current invention contribute substantially, are highlighted. It is to be appreciated that the feature of the current invention in isolation, is not necessarily the sole factor in the advantages mentioned.

The advantages of the embodiment of Figure 2 are generally similar to those of the embodiment of Figure 1, but to a larger degree, because of amplified divergence on account of a generally longer divergence and a generally larger angle of divergence.

The Inventors have found that, by commencing divergence in (at commencement of) the vortex generating region, a larger angle of divergence can be tolerated than in the Figure 1 embodiment.

The Inventors have found that the ratio of the swirl or rotating component of velocity to the axial component of velocity (also called the "Swirl Number") is directly proportional to the radius of the divergent portion. Thus, although the absolute values of both components of flow velocity decrease due to the divergence the Swirl Number increases.

When a diverging type of gas cleaning device is compared to a parallel type device of diameter equal to the larger diameter of the diverging device, it is of significance that the swirl (in the diverging device) is initially much more intense resulting in a faster concentration of particles toward the outer periphery, and thus enhances separation. The enhanced concentration toward the outer periphery allows one the option of using an inlet of larger diameter, without sacrificing separation efficiency. The larger diameter inlet has a significant beneficial affect on the pressure drop and thus the energy consumption.

The Inventors have thus found that, under circumstances requiring a high separation efficiency at a low pressure drop, a divergent type of separating device yields a more advantageous design than a parallel type of device.

When a divergent device is compared to a parallel device of the smaller diameter, separation efficiency remains good in spite of lower absolute swirl component of velocity because of the longer resident time on account of the lower axial velocity component.

A major advantage of the divergent device is that it has a significant benefit in respect of erosion or abrasion. It has been found that erosion is exponentially proportional to the speed, the exponent being higher than 3.

The Inventors are of opinion that a divergent separation device, especially of the Figure 2 type, can advantageously be used as a primary separator, or as a first stage of a series separator. They have found that a divergent separating device is less prone to blockage than parallel devices of comparable performance - simply stated, if an object with potential for blocking such as a piece of cloth or paper, is present in the flow stream, and can enter the inlet, it can generally pass through the device, more specifically through the peripheral outlet region.

The Inventors have found that a separating device in accordance with the invention, can generally operate satisfactorily at a 100% cut, i.e. with substantially no gas flow in the peripheral outlet region. A 100% cut is in practice achieved by communicating the outlet means for the peripheral outlet region with a closed chamber. The chamber will have means to allow emptying thereof from time to time to remove particles. Although this will normally marginally reduce the separation efficiency, it has large advantages in that treatment of the scavenge flow is greatly simplified. Merely the scavenged particles need be processed - there is no scavenge gas flow to process such as by filtration. This has beneficial cost implications.

## Claims

1. A method of cleaning a particle containing gas flow stream from particles in a gas cleaning device, or recovering particles from a particle containing gas flow stream in a particle recovering device (110), of the kind comprising
an outer round tube (112) having an inlet (114) at one end which will be an upstream end in use, and an opposed end (166) which will be a downstream end in use;
an axially arranged vortex or rotating flow generator (116) in a vortex generation region (118) in the tube (112) downstream of the inlet (114);
a separation region (119) downstream of the vortex generating region (118);
a peripheral outlet region (122) toward the periphery of the tube (112) downstream of the separation region (119);
a central outlet region (124) toward the centre of the tube (112) downstream of the separation region (119);
an inner round extraction tube (140), arranged concentrically within the outer round tube (112) to separate the peripheral (122) and central (124) outlet regions, having an inlet (142) at an upstream end thereof which is at a predetermined axial position corresponding to the end of the separation region (119), and an outlet means (148) for the central outlet region (124) at a downstream end thereof, said upstream end of the inner round extraction tube (140) cooperating with the outer round tube (112) to define an annular inlet of the peripheral outlet region (122);
outlet means (136) for the peripheral outlet region (122) toward a downstream end thereof;
locating means (160, 164; 162, 166) locating the inner round extraction tube (140) toward the downstream end thereof to the outer round tube (112) such that the inner round extraction tube (140) extends cantilever fashion in an upstream direction from the locating means (160, 164; 162, 166) and such that the inlet of the peripheral outlet region is circumferentially continuous and without circumferentially interrupted structure,
the method including
introducing the particle containing gas flow stream axially into the outer round tube (112) via its inlet (114);
inducing rotating flow in said particle containing gas flow stream by guiding it through the vortex generator (116);
allowing the particles to concentrate toward the outer periphery of the flow stream on account of the rotating flow;
guiding a particle enriched portion of the flow stream, toward the outer periphery of the tube (112), into the peripheral outlet region (122);
guiding a particle depleted portion of the flow stream, toward the centre of the tube (112), into the central outlet region (124),
characterized by
the outer round tube (112) having a continuously divergent portion having an included angle or cone angle of between 15° and 60° and extending from the inlet (114) downstream through a predetermined axial distance which is at least equal to the cumulative length of the vortex generating region (118) and the separation region (119); and by allowing the flow to diverge at an angle of between 15° and 60° along said continuously divergent portion of the outer round tube (112).

2. A method as claimed in Claim 1 characterized in that said included angle or cone angle of the continuously divergent portion of the outer round tube (11) is about 30° and by allowing the flow to diverge at an angle of about 30° along said continuously divergent portion of the outer round tube (112).

3. A method as claimed in Claim 1 characterized by allowing said flow to diverge over an axial length between 1 time and 3 times the nominal diameter of the outer tube (112) at its inlet (114) to a flow area which is larger than the flow area of the inlet (114) of the round tube (112) by between 30% and 800%.

4. A vortex tube gas cleaning device or vortex tube particle recovery device (110) suitable for use in treating a particle containing gas flow stream to clean the gas of particles or to recover particles from the gas, the device (110) comprising
an outer round tube (112) having an inlet (114) at one end which will be an upstream end in use, and an opposed end (166) which will be a downstream end in use;
an axially arranged vortex or rotating flow generator (116) in a vortex generation region (118) in the tube (112) downstream of the inlet (114);
a separation region (119) downstream of the vortex generating region (118);
a peripheral outlet region (122) toward the periphery of the tube (112) downstream of the separation region (119);
a central outlet region (124) toward the centre of the tube (112) downstream of the separation region (119);
an inner round extraction tube (140), arranged concentrically within the outer round tube (112) to separate the peripheral (122) and central (124) outlet regions, having an inlet (142) at an upstream end thereof which is at a predetermined axial position corresponding to the end of the separation region (119), and an outlet means (148) for the central outlet region (124) at a downstream end thereof, said upstream end of the inner round extraction tube (140) cooperating with the outer round tube (112) to define an annular inlet of the peripheral outlet region (122);
outlet means (136) for the peripheral outlet region (122) toward a downstream end thereof;
locating means (160, 164; 162, 166) locating the inner round extraction tube (140) toward the downstream end thereof to the outer round tube (112) such that the inner round extraction tube (140) extends cantilever fashion in an upstream direction from the locating means (160, 164; 162, 166) and such that the inlet of the peripheral outlet region is circumferentially continuous and without circumferentially interrupted structure,
characterized in that
the outer round tube (112) has a continuously divergent portion having an included angle or cone angle of between 15° and 60° extending from the inlet (114) downstream through a predetermined axial distance which is at least equal to the cumulative length of the vortex generating region (118) and the separation region (119).

5. A device as claimed in Claim 4 characterized in that said included angle or cone angle of the continuously divergent portion of the outer round tube (112) is about 30°.

6. A device as claimed in Claim 4 characterized in that the length of the divergent portion (130) is between 1 time and 3 times the nominal diameter of the outer tube (112) at its inlet (114) and in that the flow area at the downstream end of the separation region (119) is between 30% and 800% larger than at the inlet (114) of the outer tube (112).

7. A device as claimed in any one of Claim 4 to Claim 6 inclusive characterized in that the periphery of the vortex generator (116) is correspondingly divergent.

## Patentansprüche

1. Verfahren zum Reinigen eines Partikel enthaltenden Gasstromes von den Partikeln in einer Gasreinigungsvorrichtung oder zum Wiedergewinnen von Partikeln aus einem Partikel enthaltenden Gasstrom in einer Partikelwiedergewinnungsvorrichtung (110) mit
einem runden Außenrohr (112) mit einem Einlaß (114) an einem Ende, das im Betrieb das aufstromseitige Ende ist, und einem gegenüberliegenden Ende (166), das im Betrieb das abstromseitige Ende ist;
einem axial angeordneten Wirbelstrom- oder Drehstromerzeuger (116) in einem Wirbelerzeugüngsbereich (118) im Rohr (112) abstromseitig des Einlasses (114);
einem Abscheidungsbereich (119) abstromseitig des Wirbelerzeugungsbereiches (118);
einem Umfangsauslaßbereich (122) in Richtung auf den Umfang des Rohres (112) abstromseitig des Abscheidebereiches (119);
einem zentralen Auslaßbereich (124) in Richtung auf die Mitte des Rohres (112) abstromseitig des Abscheidebereiches (119);
einem inneren runden Extraktionsrohr (140), das konzentrisch im runden Außenrohr (112) angeordnet ist und den Umfangsauslaßbereich (122) und den zentralen Auslaßbereich (124) voneinander trennt sowie einen Einlaß (142) am aufstromseitigen Ende desselben aufweist, das sich in einer vorgegebenen Axialposition entsprechend dem Ende des Abscheidebereiches (119) befindet, und eine Auslaßeinrichtung (148) für den zentralen Auslaßbereich (124) am abstromseitigen Ende des Rohres, wobei das aufstromseitige Ende des inneren runden Extraktionsrohres (140) mit dem runden Außenrohr (112) zusammenwirkt und einen ringförmigen Einlaß des Umfangsauslaßbereiches (122) bildet;
Auslaßeinrichtungen (136) für den Umfangsauslaßbereich (122) in Richtung auf das abstromseitige Ende desselben;
und Halteeinrichtungen (160; 164; 162, 166), die das innere runde Extraktionsrohr (140) in Richtung auf das abstromseitige Ende desselben derart am runden Außenrohr (112) halten, daß sich das innere runde Extraktionsrohr (140) freitragend von den Halteeinrichtungen (160, 164; 162, 166) aus in aufstromseitiger Richtung erstreckt und daß der Einlaß des Umfangsauslaßbereiches in Umfangsrichtung kontinuierlich verläuft und keinen in Umfangsrichtung unterbrochenen Aufbau besitzt,
wobei das Verfahren die folgenden Schritte umfaßt
Einführen des Partikel enthaltenden Gasstromes in Axialrichtung in das runde Außenrohr (112) über dessen Einlaß (114);
Induzieren eines Drehstromes im Partikel enthaltenden Gasstrom durch Führen desselben durch den Wirbelerzeuger (116);
Konzentrierenlassen der Partikel zum Außenumfang des Stromes hin aufgrund des Drehstromes;
Führen eines mit Partikeln angereicherten Teiles des Stromes in Richtung auf den Außenumfang des Rohres (112) in den Umfangsauslaßbereich (122); und
Führen eines von Partikeln befreiten Teiles des Stromes in Richtung auf die Mitte des Rohres (112) in den zentralen Auslaßbereich (124),
dadurch gekennzeichnet, daß
das runde Außenrohr (112) einen kontinuierlich divergierenden Abschnitt besitzt, der einen eingeschlossenen Winkel oder Konuswinkel zwischen 15° und 60° aufweist und sich vom Einlaß (114) in abstromseitiger Richtung über eine vorgegebene axiale Distanz erstreckt, die mindestens der Gesamtlänge des Wirbelerzeugungsbereiches (118) und des Abscheidebereiches (119) entspricht, und daß man den Strom unter einem Winkel von 15 bis 60° entlang dem kontinuierlich divergierenden Abschnitt des runden Außenrohres (112) divergieren läßt.

2. Verfahren nach Anspruch 1, dadurch gekennzeichnet, daß der eingeschlossene Winkel oder Konuswinkel des kontinuierlich divergierenden Abschnittes des runden Außenrohres (11) etwa 30° beträgt und daß man den Strom unter einem Winkel von etwa 30° entlang dem kontinuierlich divergierenden Abschnitt des runden Außenrohres (112) divergieren läßt.

3. Verfahren nach Anspruch 1, dadurch gekennzeichnet, daß man den Strom über eine Axiallänge divergieren läßt, die dem ein- bis dreifachen Nenndurchmesser des Außenrohres (112) an dessen Einlaß (114) entspricht,und zwar bis zu einem Strömungsquerschnitt, der um 30 % bis 800 % größer ist als der Strömungsquerschnitt des Einlasses (114) des runden Rohres (112).

4. Wirbelrohr-Gasreinigungsvorrichtung oder Wirbelrohr-Partikelwiedergewinnungsvorrichtung (110) zum Einsatz zur Behandlung eines Partikel enthaltenden Gasstromes, um das Gas von Partikeln zu reinigen oder Partikel aus dem Gas wiederzugewinnen, mit
einem runden Außenrohr (112) mit einem Einlaß (114) an einem Ende, das im Betrieb ein aufstromseitiges Ende darstellt, und einem gegenüberliegenden Ende (166), das im Betrieb ein abstromseitiges Ende bildet;
einem axial angeordneten Wirbelstrom- oder Drehstromerzeuger (116) in einem Wirbelerzeugungsbereich (118) im Rohr (112) abstromseitig des Einlasses (114);
einem Abscheidebereich (119) abstromseitig des Wirbelerzeugungsbereiches (118);
einem Umfangsauslaßbereich (122) zum Umfang des Rohres (112) hin abstromseitig des Abscheidebereichs (119);
einem zentralen Auslaßbereich (124) zur Mitte des Rohres (112) hin abstromseitig des Abscheidebereiches (119);
einem inneren runden Extraktionsrohr (140), das konzentrisch innerhalb des runden Außenrohres (112) angeordnet ist, den Umfangsauslaßbereich (122) und den zentralen Auslaßbereich (124) voneinander trennt und einen Einlaß (142) an seinem aufstromseitigen Ende besitzt, der sich in einer vorgegebenen Axialposition befindet, die dem Ende des Abscheidebereiches (119) entspricht, sowie eine Auslaßeinrichtung (148) für den zentralen Auslaßbereich (124) am abstromseitigen Ende des Rohres, wobei das aufstromseitige Ende des inneren runden Extraktionsrohres (140) mit dem runden Außenrohr (112) zusammenwirkt und einen ringförmigen Einlaß des Umfangsauslaßbereiches (122) bildet;
Auslaßeinrichtungen (136) für den Umfangsauslaßbereich (122) in Richtung auf das abstromseitige Ende desselben; und
Halteeinrichtungen (160, 164; 162, 166), die das innere runde Extraktionsrohr (140) in Richtung auf das abstromseitige Ende desselben derart am runden Außenrohr (112) halten, daß sich das innere runde Extraktionsrohr (140) freitragend in aufstromseitiger Richtung von den Halteeinrichtungen (160, 164; 162, 66) aus erstreckt, und derart daß der Einlaß des Umfangsauslaßbereiches in Umfangsrichtung kontinuierlich verläuft und keinen in Umfangsrichtung unterbrochenen Aufbau besitzt,
dadurch gekennzeichnet, daß
das runde Außenrohr (112) einen kontinuierlich divergierenden Abschnitt mit einem eingeschlossenen Winkel oder einem Konuswinkel von 15° bis 60° besitzt, der sich vom Einlaß (114) abstromseitig über eine vorgegebene axiale Strecke erstreckt, die mindestens der Gesamtlänge des Wirbelerzeugungsbereiches (118) und des Abscheidebereiches (119) entspricht.

5. Vorrichtung nach Anspruch 4, dadurch gekennzeichnet, daß der eingeschlossene Winkel oder Konuswinkel des kontinuierlich divergierenden Abschnittes des runden Außenrohres (112) etwa 30° beträgt.

6. Vorrichtung nach Anspruch 4, dadurch gekennzeichnet, daß die Länge des divergierenden Abschnittes (130) dem ein- bis dreifachen Nenndurchmesser des Außenrohres (112) an dessen Einlaß (114) entspricht und daß der Strömungsquerschnitt am abstromseitigen Ende des Abscheidebereiches (119) um 30 % bis 800 % größer ist als am Einlaß (114) des Außenrohres (112).

7. Vorrichtung nach einem der Ansprüche 4 bis 6, dadurch gekennzeichnet, daß der Umfang des Wirbelerzeugers (116) entsprechend divergiert.

## Revendications

1. Procédé d'épuration d'un écoulement de gaz des particules qu'il contient, ou de récupération de particules contenues dans un écoulement de gaz par un dispositif de récupération de particules (110), du type comprenant
un tube extérieur rond (112) pourvu à ses extrémités d'une entrée (114) et d'une sortie (166) qui, en fonctionnement, sont respectivement les extrémités amont et aval ;
un générateur de tourbillon ou d'écoulement rotatif (116) monté de façon axiale dans une zone de génération de tourbillon (118) située dans le tube extérieur (112) en aval de l'entrée (114) ;
une zone de séparation (119) en aval de la zone de génération de tourbillon (118) ;
une zone de sortie périphérique (122) vers la périphérie du tube (112) en aval de la zone de séparation (119) ;
une zone de sortie centrale (124) vers le centre du tube (112) en aval de la zone de séparation (119) ;
un tube d'extraction intérieur rond (140) monté de façon concentrique à l'intérieur du tube extérieur rond (112) pour séparer les zones de sortie périphérique (122) et centrale (124), pourvu d'une entrée (142) à son extrémité amont qui est située en une position axiale prédéterminée correspondant à l'extrémité de la zone de séparation (119) et un moyen de sortie (148) pour la zone de sortie centrale (124) à son extrémité aval, ladite extrémité amont du tube d'extraction intérieur rond (140) coopérant avec le tube extérieur (112) pour définir une entrée annulaire de la zone de sortie périphérique (122),
des moyens de sortie (136) pour la zone de sortie périphérique (122) vers son extrémité aval,
des moyens de positionnement (160, 164 ; 162, 166) servant à positionner le tube d'extraction intérieur (140) vers son extrémité aval sur le tube extérieur (112), de manière que le tube intérieur rond (140) soit en porte-à-faux dans la direction amont à partir des moyens de positionnement (160, 164 ; 162, 166), et que l'entrée de la région de sortie périphérique soit continue sur toute la circonférence et sans structure d'interruption,
le procédé comprenant les étapes de :
- introduction du flux d'écoulement de gaz contenant des particules de façon axiale dans le tube extérieur rond (112) par l'entrée de celui-ci (114) ;
- induction d'un flux rotatif dans ledit écoulement de gaz contenant des particules en le guidant à travers le générateur de tourbillon (116) ;
- concentration des particules vers la périphérie extérieure de l'écoulement du fait de l'écoulement rotatif ;
- guidage d'une partie du flux d'écoulement enrichie en particules vers la périphérie extérieure du tube (112) dans la zone de sortie périphérique (122) ;
- guidage d'une partie du flux d'écoulement appauvrie en particules vers le centre du tube (112) dans la zone de sortie centrale (124),
caractérisé en ce que le tube extérieur (112) a une portion divergente de façon continue, ayant un angle inclus ou un angle conique compris entre 15 et 60° et qui s'étend depuis l'entrée (114) vers l'aval sur une distance axiale prédéterminée au moins égale à la somme de la longueur de la zone de génération de tourbillon (118) et la zone de séparation (119),
et en ce qu'il permet au flux de diverger d'un angle compris entre 15 et 60° le long de ladite zone de tube extérieur (112) qui diverge de façon continue.

2. Procédé selon la revendication 1, caractérisé en ce que ledit angle inclus ou angle conique de la portion qui diverge de façon continue du tube rond extérieur (112) est d'environ 30° et que l'on permet au flux de diverger d'un angle d'environ 30° le long de ladite portion divergente qui diverge de façon continue du tube rond extérieur (112).

3. Procédé selon la revendication 1, caractérisé en ce qu'il permet audit flux de diverger sur une longueur axiale entre 1 fois et 3 fois le diamètre nominal du tube extérieur (112) à son entrée (114), vers une zone d'écoulement plus large que la zone d'écoulement de l'entrée (114) du tube extérieur (112) de 30% à 800%.

4. Dispositif d'épuration de gaz à tube à tourbillon ou dispositif de récupération de particules à tube à tourbillon (110) pouvant être utilisé pour le traitement d'un flux d'écoulement de gaz contenant des particules afin d'épurer le gaz des particules ou de récupérer les particules dans le gaz, le dispositif (110) comprenant :
- un tube extérieur rond (112) pourvu à ses extrémités d'une entrée (114) et d'une sortie (116) qui, en fonctionnement, sont respectivement les extrémités amont et aval ;
- un générateur de tourbillon ou d'écoulement rotatif monté de façon axiale (116) dans une zone de génération de tourbillon (118) située dans le tube (112) en aval de l'entrée (114) ;
- une zone de séparation (119) en aval de la zone de génération de tourbillon (118) ;
- une zone de sortie périphérique (122) vers la périphérie du tube (112) en aval de la zone de séparation (119) ;
- une zone de sortie centrale (124) vers le centre du tube (112) en aval de la zone de séparation (119) ;
- un tube d'extraction intérieur rond (140) monté de façon concentrique à l'intérieur du tube extérieur rond (112) pour séparer les zones de sortie périphérique (122) et centrale (124), pourvu d'une entrée (142) à son extrémité amont qui est située en une position axiale prédéterminée correspondant à l'extrémité de la zone de séparation (119) et un moyen de sortie (148) pour la zone de sortie centrale (124) à son extrémité aval, ladite extrémité amont du tube d'extraction intérieur rond (140) coopérant avec le tube extérieur rond (112) pour définir une entrée annulaire de la zone de sortie périphérique (122),
- des moyens de sortie (136) pour la zone de sortie périphérique (122) vers son extrémité aval,
- des moyens de positionnement (160, 164 ; 162, 166) servant à positionner le tube d'extraction intérieur (140) vers son extrémité aval sur le tube extérieur (112), de manière que le tube d'extraction intérieur rond (140) soit en porte-à-faux dans la direction aval à partir des moyens de positionnement (160, 164 ; 162, 166), et que l'entrée de la région de sortie périphérique soit continue sur toute la circonférence et sans structure d'interruption,
caractérisé en ce que
le tube extérieur rond (112) a une portion divergente de façon continue, ayant un angle inclus ou un angle conique compris entre 15 et 60°, qui s'étend depuis l'entrée (114) vers l'aval sur une distance axiale prédéterminée au moins égale à la somme de la longueur de la zone de génération de tourbillon (118) et la zone de séparation (119).

5. Dispositif selon la revendication 4, caractérisé en ce que ledit angle inclus ou angle conique de la portion qui diverge de façon continue du tube extérieur rond (112) est d'environ 30°.

6. Dispositif selon la revendication 4, caractérisé en ce que la longueur de la partie divergente (130) est comprise entre 1 et 3 fois le diamètre nominal du tube extérieur (112) à son entrée (114) et en ce que la surface d'écoulement à l'extrémité aval de la zone de séparation (119) est de 30% à 800% plus grande qu'à l'entrée (114) du tube extérieur (112).

7. Dispositif selon la revendication 1, caractérisé en ce que la périphérie du générateur de tourbillon (116) est divergente de manière correspondante.
